# EUROPÄISCHE PATENTSCHRIFT

(11) **EP 2 200 389 B1**
(45) Veröffentlichungstag und Bekanntmachung des Hinweises auf die Patenterteilung: **19.12.2012**
(21) Anmeldenummer: 10002773.9
(22) Anmeldetag: 15.02.2000
(51) Int. Cl.: H04W 72/10

(54) **Telekommunikationssystem zur Vergabe von Zugriffsrechten auf einen Telekommunikationskanal an Teilnehmerstationen eines Telekommunikationsnetzes**
Telecommunication system with allocation of access rights for a telecommunications channel to subscriber stations of a telecommunications network
Système de télécommunications pour l'allocation de droits d'accès pour un canal de télécommunications à des stations d'utilisateur d'un réseau de télécommunications

(30) Priorität: 08.03.1999 DE 19910239
(43) Veröffentlichungstag der Anmeldung: 23.06.2010
(62) Teilanmeldung aus: 07009265.5
(73) Patentinhaber: IPCom GmbH & Co. KG, 82049 Pullach (DE)
(72) Erfinder: Fischer, Ralf, 31199 Diekholzen (DE); Hans, Martin, 31162 Bad Salzdetfurth (DE); Kowalewski, Dr. Frank, 37085 Göttingen (DE); Laumen, Josef, 85375 Neufahrn (DE); Schmidt, Gunnar, 78052 Villingen-Schwenningen (DE); Lechner, Detlef, 12101 Berlin-Tempelhof (DE); Schulz, Holger, 10587 Berlin (DE)
(74) Vertreter: Molnia, David

(56) Entgegenhaltungen:
- WO-A-91/15069
- WO-A-97/19525
- WO-A1-97/09836
- GB-A- 2 300 090
- US-A- 4 707 832
- NAPOLITANO A ET AL: "Evolution of the GSM platform" UNIVERSAL PERSONAL COMMUNICATIONS, 1998. ICUPC '98. IEEE 1998 INTERNAT IONAL CONFERENCE ON FLORENCE, ITALY 5-9 OCT. 1998, NEW YORK, NY, USA,IEEE, US LNKD- DOI:10.1109/ICUPC.1998.733012, Bd. 1, 5. Oktober 1998 (1998-10-05), Seiten 409-413, XP010314926 ISBN: 978-0-7803-5106-6
- DANNEELS J: "The future of communications" SOLID-STATE CIRCUITS CONFERENCE, 1998. ESSCIRC '98. PROCEEDINGS OF THE 24TH EUROPEAN THE HAGUE, THE NETHERLANDS 22-24 SEPT. 1998, PISCATAWAY, NJ, USA,IEEE, 22. September 1998 (1998-09-22), Seiten 35-43, XP010823412 ISBN: 978-2-86332-235-2

## Beschreibung

Die Erfindung geht von einem Telekommunikationssystem mit Zugriffskontrolle, bzw. -Verwaltung auf einen Telekommunikationskanal für eine Teilnehmerstation nach der Gattung des unabhängigen Anspruchs aus.

Aus der noch nicht vorveröffentlichten deutschen Patentanmeldung mit dem Aktenzeichen 19838832.2 ist bereits ein Verfahren zur Zugriffskontrolle auf einen Telekommunikationskanal eines Telekommunikationsnetzes für mindestens eine Teilnehmerstation des Telekommunikationsnetzes bekannt, wobei Informationssignale an die mindestens eine Teilnehmerstation übertragen werden.

Aus der WO97/1952 A ist ein Übertragungsverfahren und Vorrichtung zur Zugriffssteuerung bekannt, in dem eine Basisstation einer Vielzahl von Mobilstationen unterschiedliche Zugriffswahrscheinlichkeiten für unterschiedliche Nachrichtenklassen übersendet und jede Mobilstation aus den empfangenen Zugriffswahrscheinlichkeiten Zeitverzögerungen herleitet, die sie dann für die Übertragung einer Nachricht entsprechend der Nachrichtenklasse einhalten muss.

### Vorteile der Erfindung

Das erfindungsgemäße Telekommunikationssystem hat die Merkmale des unabhängigen Anspruchs 1.

Durch die in den Unteransprüchen aufgeführten Maßnahmen sind vorteilhafte Weiterbildungen und Verbesserungen des im unabhängigen Anspruch 1 angegebenen Telekommunikationssystem möglich.

### Zeichnung

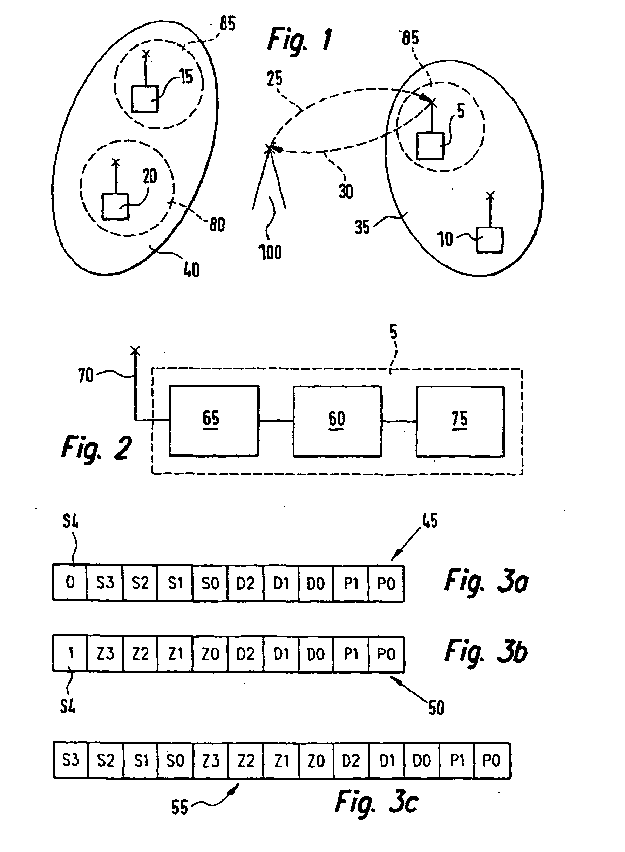

Ausführungsbeispiele der Erfindung sind in der Zeichnung dargestellt und in der nachfolgenden Beschreibung näher erläutert. Es zeigen Figur 1 einen Ausschnitt aus einem Telekommunikationsnetz,
Figur 2 ein Blockschaltbild einer erfindungsgemäßen Teilnehmerstation.
Figur 2a ein erstes Bitmuster für die Zuteilung des Zugriffs auf einen Telekommunikationskanal,
Figur 3b ein zweites Bitmuster für die Zuteilung des Zugriffs auf einen Telekommunikationskanal,
Figur 3c ein drittes Bitmuster für die Zuteilung des Zugriffs auf einen Telekommunikationskanal, und Die Figuren 4a, 4b und 4c einen Ablaufplan für die Funktionsweise einer Auswerteeinheit der erfindungsgemäßen Teilnehmerstation.

### Beschreibung der Ausführungsbeispiele

In Figur 1 kennzeichnet 100 eine Basisstation eines als Mobilfunknetz ausgebildeten Telekommunikationsnetzes. Ein solches Mobilfunknetz ist normalerweise zellular aufgebaut, wobei jede Funkzelle des Mobilfunknetzes von einer Basisstation versorgt wird. Die Basisstation 100 spannt also eine Funkzelle im Mobilfunknetz auf, in der gemäß Figur 1 eine erste Teilnehmerstation 5, eine zweite Teilnehmerstation 10, eine dritte Teilnehmerstation 15 und eine vierte Teilnehmerstation 20 angeordnet sind. Bei den vier Teilnehmerstationen 5, 10, 15, 20 soll es sich beispielhaft um Mobilstationen, wie beispielsweise Mobiltelefone, Funktelefone, oder dergleichen handeln. Bei den hier beschriebenen Ausführungsbeispielen sollen also die erste Teilnehmerstation 5 als erste Mobilstation, die zweite Teilnehmerstation 10 als zweite Mobilstation, die dritte Teilnehmerstation 15 als dritte Mobilstation und die vierte Teilnehmerstation 20 als vierte Mobilstation ausgebildet sein.

Ein Netzbetreiber des Mobilfunknetzes bietet eine vorgegebene Anzahl von Telekommunikationsdiensten an. Im folgenden sollen beispielhaft drei verschiedene Telekommunikationsdienste vom Netzbetreiber angeboten werden können. Dabei kann als ein erster Telekommunikationsdienst beispielsweise ein Dienst für die Versendung kleiner Datenpakete vorgesehen sein, der von den Mobilstationen 5,10,15,20 benutzt werden kann, um kleine Datenpakete an die Basisstation 100 über einen wahlfreien Zugriffskanal 30, der im folgenden beispielhaft als RACH (Random Access Channel) ausgebildet sein soll, zu übertragen. Als ein zweiter Telekommunikationsdienst kann beispielsweise ein Dienst zum Versenden größerer Paketdaten vorgesehen sein, bei dem der RACH 30 von den Mobilstationen 5,10,15,20 benutzt werden darf, um gesonderte Datenkanäle zur Paketdatenübertragung anzufordern. Als ein dritter Telekommunikationsdienst kann beispielsweise ein Dienst zur Sprach-, bzw. leitungsgebundenen Datenübertragung vorgesehen sein, bei dem der RACH 30 von den Mobilstationen 5, 10, 15, 20 benutzt werden darf, um Sprach- und/oder Datenübertragungen einzuleiten oder fortzusetzen.

Die drei Telekommunikationsdienste können einzeln und/oder in beliebiger Kombination den Mobilstationen 5,10,15,20 vom Netzbetreiber erlaubt werden.

Die Telekommunikationsdienste müssen dabei von der entsprechenden Mobilstation über die Basisstation 100 beim Netzbetreiber angefordert werden. Die Telekommunikationsdienste werden üblicherweise über den RACH 30 von den Mobilstationen 5,10,15,20 angefordert oder zugänglich gemacht. Über den RACH 30 können in der Regel Nachrichten von mehreren Mobilstationen an die Basisstation 100 gesendet werden. Auf diese Weise können Nachrichten verschiedener Mobilstationen miteinander kollidieren. Die Basisstation 100 bestätigt daher ordnungsgemäß empfangene Nachrichten, in dem sie entsprechende Bestätigungs- oder Quittierungsinformationen auf einem anderen, in Figur 1 nicht dargestellten Kanal, beispielsweise einem Paging-Kanal, an diejenigen Mobilstationen zurücksendet, deren Nachrichten sie ordnungsgemäß empfangen hat.

Für den Fall, dass die Nachricht einer Mobilstation auf dem RACH 30 mit einer anderen Nachricht kollidiert, findet kein ordnungsgemäßer Empfang dieser Nachricht in der Basisstation 100 statt, so dass die Basisstation 100 auch keine Bestätigungsinformation an die entsprechende Mobilstation zurücksenden kann. Die Mobilstation sendet daher meist nach einer vorgegebenen Zeit, in der keine Bestätigungsinformation von der Basisstation 100 empfangen wurde, die Nachricht erneut über den RACH 30 zur Basisstation 100. Auf diese Weise droht eine Überlastung des RACH 30, der somit die benutzerinitiierte Anforderung von Telekommunikationsdiensten durch die entsprechenden Mobilstationen durch seine begrenzte Übertragungskapazität beschränkt.

Eine Überlastung des RACH 30 kann dadurch vermieden werden, dass der Netzbetreiber den Zugriff auf den RACH für die einzelnen Mobilstationen 5,10,15,20 gezielt einschränkt. Dabei kann der Zugriff auf den RACH beispielsweise nur für bestimmte Nutzerklassen von Mobilstationen vorübergehend oder dauerhaft bevorrechtigt erlaubt werden. Gemäß den beschriebenen Ausführungsbeispielen nach Figur 1 ist eine erste Nutzerklasse 35 vorgesehen, die die erste Mobilstation 5 und die zweite Mobilstation 10 umfasst. Weiterhin ist eine zweite Nutzerklasse 40 vorgesehen, die die dritte Mobilstation 15 und die vierte Mobilstation 20 umfasst. Es kann jedoch auch vorgesehen sein, für jede Mobilstation eine eigene Nutzerklasse vorzusehen. Es könnte auch vorgesehen sein, Nutzerklassen mit unterschiedlicher Anzahl von Mobilstationen vorzusehen. Weiterhin ist es möglich, mehr als zwei Mobilstationen in einer Nutzerklasse vorzusehen. Der Netzbetreiber kann nun den einzelnen Mobilstationen in Abhängigkeit ihrer Zugehörigkeit zu einer der beiden Nutzerklassen 35,40 der Zugriff auf den RACH freigegeben werden. Das bedeutet, dass den beiden Mobilstationen 5,10 der ersten Nutzerklasse 35 gleiche Rechte für das Senden auf dem RACH zugeteilt werden. In analoger Weise werden auch den Mobilstationen 15,20 der zweiten Nutzerklasse 40 gleiche Rechte für das Senden auf dem RACH zugeteilt.

Der Netzbetreiber informiert die einzelnen Mobilstationen 5,10,15,20 durch Informationssignale, die von der Basisstation 100 an die jeweilige Mobilstation 5,10,15,20 übertragen werden, welche Rechte für das Senden auf dem RACH der entsprechenden Mobilstation 5,10,15,20 zugeteilt sind. Dies wird stellvertretend für alle Mobilstationen 5,10,15,20 im folgenden anhand der Zuteilung der Rechte für das Senden auf dem RACH an die erste Mobilstation 5 gemäß Figur 1 beschrieben.

Dabei überträgt die Basisstation 100 zu vorgegebenen Zeiten Informationssignale an die erste Mobilstation 5. Die Informationssignale können dabei gemäß Figur 1 über einen Signalisierungskanal 25, der im folgenden beispielhaft als Broadcast Control Channel BCCH ausgebildet sein soll, übertragen werden. Dabei wird mit den Informationssignalen zu den vorgegebenen Zeiten jeweils ein Bitmuster an die erste Mobilstation 5 übertragen. Das Bitmuster kann in einer ersten Ausführungsform Informationen darüber enthalten, zu welchem Zweck und für welche Mobilstationen der Zugriff auf den RACH erlaubt ist. Bei den möglichen Zugriffszwecken handelt es sich dabei beispielsweise um die bereits oben beschriebenen Fälle, wie das Versenden kleiner Datenpakete, die Kanalanforderung für größere Paketdaten und die Kanalanforderung für Sprach-/Datendienste. Ein weiterer möglicher Zugriffszweck ist jedoch auch das Versenden von Signalisierungsinformationen von der Teilnehmerstation zur Basisstation, die dem Aufrechterhalten und/oder der Modifikation von bereits bestehenden Verbindungen dienen. Da das von der Basisstation gesendete Bitmuster nicht nur zur ersten Mobilstation 5, sondern auch zu allen anderen Mobilstationen 10,15,20 ebenfalls über den Signalisierungskanal 25, der wie beschrieben als BCCH und damit als Punkt-zu-Mehrpunkt-Kanal ausgebildet ist, so dass alle Mobilstationen die gleichen Informationen zur gleichen Zeit erhalten, gesendet wird, um diesen die ihnen zugeteilten RACH-Zugriffsrechte mitzuteilen, umfasst das Bitmuster die zugeteilten Zugriffsrechte für jede Nutzerklasse 35,40.

Eine zufällige Streuung der Zugriffsberechtigung auf den RACH 30 über einen Teil der Mobilstationen 5,10,15,20 wird erreicht, indem auf dem BCCH 25 ein Zugriffsschwellwert S gesendet wird. In Figur 2 ist beispielhaft ein Blockschaltbild der ersten Mobilstation 5 dargestellt. Die erste Mobilstation 5 umfasst dabei eine Sende-/Emfpangseinheit 65 mit einer Sende-/Empfangsantenne 70. Die Sende-/Emfpangseinheit 65 ist außerdem an eine Auswerteeinheit 60 angeschlossen, die auf eine Zugriffsberechtigungskarte 75, beispielsweise eine SIM-Karte (Subscriber-Identity-Module) zugreift. In Figur 2 sind nur die für die Beschreibung der Erfindung erforderlichen Elemente der ersten Mobilstation 5 dargestellt. Das erfindungsgemäße Verfahren wird im folgenden beispielhaft anhand der ersten Mobilstation 5 beschrieben, wobei die zweite Mobilstation 10, die dritte Mobilstation 15 und die vierte Mobilstation 20 ebenfalls den gemäß Figur 2 beschriebenen Aufbau aufweisen. Die erste Mobilstation 5 empfängt mittels ihrer Sende-/Empfangseinheit 65 die über den BCCH 25 übertragenen Informationssignale, die den Zugriffsschwellwert S umfassen. Der Zugriffsschwellwert S wird der Auswerteeinheit 60 zugeführt. Die Auswerteeinheit 60 zieht vor jedem Zugriff der ersten Mobilstation 5 auf dem RACH 30 eine Zufalls- oder Pseudozufallszahl R und prüft, ob die Zufalls- oder Pseudozufallszahl R mindestens so gross wie der Zugriffsschwellwert S ist. Nur dann ist ein Zugriff auf den RACH 30 erlaubt. Dabei gilt beispielsweise, dass der Zugriffsschwellwert S aus dem Intervall {0,1...n+1} und die Zufalls- oder Pseudozufallszahl R aus dem Intervall {0,1...n} ist. Dadurch kann die Nutzung des RACH 30 mit dem Zugriffsschwellwert S = n +1 für alle Mobilstationen 5,10,15,20 eingeschränkt, das heißt der Zugriff auf den RACH 30 verhindert werden. Wird die Zufalls- oder Pseudozufallszahl R mittels einer gleich verteilten Zufallsfunktion aus dem entsprechenden Intervall {0,1,...n} gezogen, so ist die Wahrscheinlichkeit zum Zugriff auf den RACH 30 für alle Mobilstationen 5,10,15,20 gleich.

Im folgenden wird anhand der Figuren 3a und 3b ein erstes Ausführungsbeispiel beschrieben. Zugriffsberechtigungsdaten 45, 50, 55 sind im ersten Ausführungsbeispiel und den weiteren Ausführungsbeispielen als Bitmuster ausgeführt, wobei die Zugriffsberechtigungsdaten 45, 50, 55 mit den Informationssignalen an die Mobilstationen 5, 10, 15, 20 übertragen werden und wobei die Zugriffsberechtigungsdaten 45, 50, 55 die Informationen über die Rechte zur Nutzung des RACH 30 umfassen. Im ersten Ausführungsbeispiel werden an jede Mobilstation 5, 10, 15, 20 Informationssignale übertragen, die jeweils ein Bitmuster, bestehend aus 10 Bits, umfassen. Dabei ist ein erstes Bit ein Auswertebit S4. Die Figur 3a zeigt den Fall, in dem das Auswertebit S4 = 0 ist. Das zweite Bit ist dann ein erstes Zugriffsschwellwert-Bit S3, dass dritte Bit ein zweites Zugriffsschwellwert-Bit S2, dass vierte Bit ein drittes Zugriffsschwellwert-Bit S1 und das fünfte Bit ein viertes Zugriffsschwellwert-Bit S0. Mit den vier Zugriffsschwellwert-Bits S3, S2, S1, S0 lassen sich an diesem Beispiel 2<4> = 16 Zugriffsschwellwerte S vom Netzbetreiber an die Mobilstationen 5,10,15,20 übertragen, wobei über den BCCH 25 zu allen Mobilstationen 5,10,15,20 der gleiche Zugriffsschwellwert S übertragen wird. Je nach dem aktuellen Nachrichtenverkehrsaufkommen im Telekommunikationsnetz kann der Zugriffsschwellwert S dabei größer oder kleiner eingestellt, dass heißt verändert bzw. angepasst werden. Bei 16 möglichen Zugriffsschwellwerten S können maximal 16 Zugriffsklassen für die Mobilstationen 5,10,15,20 gebündelt werden, wobei die Zugehörigkeit einer Mobilstation 5,10,15,20 zu einer der 16 Zugriffsklassen vom Ziehen einer von 16 Zufalls- oder Pseudozufallszahlen R in der jeweiligen Auswerteeinheit der Mobilstation 5,10,15,20 abhängt und sich somit bei jedem neuen Ziehvorgang ändern kann. Das sechste Bit im ersten Bitmuster 45 ist ein erstes Telekommunikationsdienst-Bit D2, das siebte Bit ist ein zweites Telekommunikationsdienst-Bit D1 und das achte Bit ist ein drittes Telekommunikationsdienst-Bit D0. Das erste Telekommunikationsdienst-Bit D2 gibt an, ob der erste Telekommunikationsdienst genutzt werden kann, das zweite Telekommunikationsdienst-Bit D1 gibt an, ob der zweite Telekommunikationsdienst genutzt werden kann und das dritte Telekommunikationsdienst-Bit D0 gibt an, ob der dritte Telekommunikationsdienst genutzt werden kann. Es kann vereinbart werden, das ein Telekommunikationsdienst dann nutzbar ist, wenn das zugehörige Telekommunikationsdienst-Bit gesetzt ist.

Die Mobilstationen 5,10,15,20 können zusätzlich in sogenannte Prioritätsklassen 80,85 eingeteilt sein. Gemäß Figur 1 ist die vierte Mobilstation 20 in eine erste Prioritätsklasse 80 eingeteilt. Die erste Mobilstation 5 und die dritte Mobilstation 15 sind gemäß Figur 1 in eine zweite Prioritätsklasse 85 eingeteilt. Die zweite Mobilstation 10 ist gemäß Figur 1 in keine Prioritätsklasse eingeteilt. Das neunte Bit des ersten Bitmusters 45 ist ein erstes Prioritätsbit P1 und das zehnte Bit des ersten Bitmusters 45 ist ein zweites Prioritätsbit P0. Somit kann über das erste Bitmuster 45 ein Prioritätsschwellwert P mit vier verschiedene Werten zu den Mobilstationen 5,10,15,20 übertragen werden. Es sind daher maximal vier Prioritätsklassen mit jeweils unterschiedlicher Priorität durch den Prioritätsschwellwert P unterscheidbar. Gemäß Figur 1 sind nur zwei der gemäß Figur 3a möglichen vier Prioritätsklassen dargestellt. So könnte beispielsweise die erste Prioritätsklasse 80 eine Prioritätsklasse für Notdienste wie beispielsweise der Polizei oder der Feuerwehr mit dem höchsten Prioritätswert 4 darstellen. Die zweite Prioritätsklasse 85 könnte beispielsweise eine Prioritätsklasse für einen städtischen Energieversorger mit einem etwas niedrigeren Prioritätswert 3 darstellen. Falls eine Mobilstation 5,10,15,20 zu einer Prioritätsklasse gehört, so ist der zugehörige Prioritätswert auf der Zugangsberechtigungskarte 75 abgelegt und kann dort von der Auswerteeinheit 60 ermittelt werden. Von den Mobilstationen 5,10,15,20, die eine Zufalls- oder Pseudozufallszahl R größer oder gleich den Zugriffsschwellwert S ziehen, erhalten dann nur diejenigen Zugriffsberechtigung auf den RACH 30, deren Prioritätswert auch größer oder gleich dem Prioritätsschwellwert P ist. Im Falle der zweiten Mobilstation 10, die keiner Prioritätsklasse zugeordnet ist, kann dabei vorgesehen sein, dass ihre Auswerteeinheit einen Zufalls- oder Pseudozufallsprioritätswert aus den vier möglichen Prioritätswerten zieht und den gezogenen Prioritätswert mit den übertragenen Prioritätsschwellwert P vergleicht und die Zugriffsberechtigung für den RACH 30 erhält, wenn der gezogene Zufalls- oder Pseudozufallsprioritätswert größer oder gleich dem Prioritätsschwellwert P ist. Vorausgesetzt ist dabei, dass auch die von der Auswerteeinheit der zweiten Mobilstation 10 gezogenen Zufalls- oder Pseudozufallszahl R größer oder gleich dem Zugriffsschwellwert S ist. Es kann jedoch auch vorgesehen sein, dass die Mobilstationen, die keiner Prioritätsklasse angehören, keinen Vergleich mit dem Prioritätsschwellwert P durchführen müssen, sondern lediglich eine Zufalls- oder Pseudozufallszahl R ziehen müssen, die größer oder gleich dem Zugriffsschwellwert S ist, um auf den RACH 30 zugreifen zu dürfen. Eine Mobilstation ist dann keiner Prioritätsklasse zugeordnet, wenn auf der eingeschobenen Zugangsberechtigungskarte 75 kein Prioritätswert abgelegt ist.

Es kann auch vorgesehen sein, dass in einem Speicher der Auswerteeinheit ein vorgegebener Prioritätswert abgespeichert ist, der einem der vier möglichen Prioritätswerte entspricht. Für den Fall, dass die Auswerteeinheit 60 auf der Zugangsberechtigungskarte 75 keinen Prioritätswert ermittelt, kann sie den vorgegebenen Prioritätswert zum Vergleich mit dem Prioritätsschwellwert P in der beschriebenen Weise verwenden.

In Figur 3b ist ein zweites Bitmuster 50 mit ebenfalls einer Bitlänge von 10 Bit dargestellt, wobei der Aufbau des zweiten Bitmuster 50 dem Aufbau des ersten Bitmusters 45 entspricht mit Ausnahme der Tatsache, dass das Auswertebit S4 auf 1 gesetzt ist und daher das zweite Bit, das dritte Bit, das vierte Bit und das fünfte Bit des zweiten Bitmusters 50 nicht mehr als Schwellwertbits sondern als Zugriffsklassenbits definiert sind. So ist das zweite Bit des zweiten Bitmusters 50 ein erstes Zugriffsklassenbit Z3, das dritte Bit des zweiten Bitmusters 50 ein zweites Zugriffsklassenbit Z2, das vierte Bit des zweiten Bitmusters 50 ein drittes Zugriffsklassenbit Z1 und das fünfte Bit des zweiten Bitmusters 50 ein viertes Zugriffsklassenbit Z0. Das erste Zugriffsklassenbit Z3 steht für die erste Nutzerklasse 35, das zweite Zugriffsklassenbit Z2 steht für die zweite Nutzerklasse 40, das dritte Zugriffsklassenbit Z1 steht für eine dritte, in Figur 1 nicht dargestellte Nutzerklasse und das vierte Zugriffsklassenbit Z0 steht für eine vierte in Figur 1 ebenfalls nicht dargestellt Nutzerklasse. Die Zugriffsklassenbits werden in ihrer Gesamtheit auch als Zugriffsklasseninformationen bezeichnet.
Gemäß Figur 1 sind alle Mobilstationen 5,10,15,20 der ersten Nutzerklasse 35 oder der zweiten Nutzerklasse 40 zugeordnet. Weitere, in Figur 1 nicht dargestellte Mobilstationen können ebenfalls der ersten Nutzerklasse 35 oder der zweiten Nutzerklasse 40 zugeordnet sein. Sie können aber auch der dritten Nutzerklasse oder der vierten Nutzerklasse oder gar keiner Nutzerklasse zugeordnet sein. Wenn ein Zugriffsklassenbit im zweiten Bitmuster 50 den Wert 0 hat, dass heißt nicht gesetzt ist, so dürfen alle Mobilstationen der zugeordneten Nutzerklasse auf den RACH 30 zugreifen.

Wenn ein Zugriffsklassenbit des zweiten Bitmusters 50 auf 1 gesetzt ist, so darf keine Mobilstation der zugeordneten Nutzerklasse auf den RACH 30 zugreifen.

Alle Mobilstationen, die auf den RACH 30 zugreifen dürfen, können diejenigen Telekommunikationsdienste nutzen, deren zugeordnete Telekommunikationsdienstbits im ersten Bitmuster 45 bzw. im zweiten Bitmuster 50 gesetzt sind.

Es kann auch vorgesehen sein, dass in einem Speicher der Auswerteeinheit ein vorgegebener Prioritätswert abgespeichert ist, der einem der vier möglichen Prioritätswerte entspricht. Für den Fall, dass die Auswerteeinheit 60 auf die Zugangsberechtigungskarte 75 keinen Prioritätswert ermittelt, kann sie den vorgegebenen Prioritätswert zum Vergleich mit dem Prioritätsschwellwert P in der beschriebenen Weise verwenden.

Die Zugehörigkeit zu einer Nutzerklasse entnimmt die Auswerteeinheit der entsprechenden Mobilstation ebenfalls von der Zugangsberechtigungskarte 75. Ist dort keine Nutzerklasse gespeichert, so erkennt die Auswerteeinheit der entsprechenden Mobilstation, dass diese keiner Nutzerklasse angehört.

Wenn das Auswertebit S4 auf 1 gesetzt ist, ist kein Zugriff von Mobilstationen auf den RACH 30 möglich, die keiner Nutzerklasse angehören.

Im folgenden wird am Beispiel für ein mit dem Informationssignal übertragenes Bitmuster der Bitlänge von 10 Bit beschrieben. Bei diesem Beispiel wird die Bitfolge "auf 0 1000 011 01" an die Mobilstationen 5,10,15,20 von der Basisstation 100 über den BCCH 25 gesendet. Das bedeutet, dass die Mobilstationen, die einer Nutzerklasse zugeordnet sind, wie Mobilstationen behandelt werden, die keiner Nutzerklasse zugeordnet sind, da das Auswertebit S4 nicht gesetzt ist. Durch die Zugriffsschwellwert-Bits S3, S2, S1, S0 wird der Zugriffsschwellwert S binär kodiert und durch die Prioritätsbits P1, P0 wird der Prioritätsschwellwert P binär kodiert. Für den Zugriffsschwellwert S ergibt sich somit ein Wert von 8 und für den Prioritätsschwellwert P ein Wert von 1. Ist eine Mobilstation nach Auswertung von P und S zugriffsberechtigt, so darf sie den RACH jedoch lediglich zur Kanalanforderung für größere Paketdatendienste und für Sprach-/Datendienste nutzen. Aufgrund der obigen Einstellung für die Dienstinformation ist es solchen Mobilstationen NICHT erlaubt, den RACH für die Versendung kleiner Datenpakete zu nutzen.
Das zweite, dritte, vierte und fünfte Bit des ersten Bitmusters 45 bzw. des zweiten Bitmusters 50 stellen Zugriffsberechtigungsinformationen dar, die beim ersten Bitmuster 45 den Zugriffsschwellwert S und beim zweiten Bitmuster 50 die Zugangsberechtigung für die vier Nutzerklassen angeben. Das erste Bit bestimmt dabei, ob das zweite bis fünfte Bit gemäß dem ersten Bitmuster 45 oder gemäß dem zweiten Bitmuster 50 interpretiert wird.

In einem zweiten Ausführungsbeispiel wird in Fig 3c ein drittes Bitmuster 55 mit den Informationssignalen von der Basisstation 100 zu den Mobilstationen 5,10,15,20 übertragen, dass eine Bitlänge von 13 Bit aufweist. Das dritte Bitmuster 55 weist kein Auswertebit S4 auf und umfasst daher sowohl die Zugriffsschwellwert-Bits S3,S2,S1,S0 als auch die Zugriffsklassenbits Z3,Z2,Z1,Z0. Zusätzlich umfasst das dritte Bitmuster 55 wie auch das erste Bitmuster 45 und das zweite Bitmuster 50 die Telekommunikationsdienstbits D2,D1,D0 und die Prioritätsbits P1,P0. Mobilstationen, die einer Nutzerklasse angehören, für die das zugehörigen Zugriffsklassenbit = 0 ist, können unabhängig vom Zugriffsschwellwert S und vom Prioritätsschwellwert P und damit ggf. ohne deren Auswertung in der Auswerteeinheit 60 auf den RACH 30 zugreifen. Mobilstationen, die einer Nutzerklasse angehören, deren zugeordnetes Zugriffsklassenbit auf 1 gesetzt ist, sowie Mobilstationen, die keiner Nutzerklasse angehören, müssen zur Ermittlung ihrer Zugriffsberechtigung auf den RACH 30 die bereits im ersten Ausführungsbeispiel beschriebenen Zugriffsschwellwert - und ggf. zusätzlich die im ersten Ausführungsbeispiel beschriebenen Prioritätsschwellwertauswertung durchführen. Als Beispiel wird die folgende Bitfolge betrachtet: "1000 0110 011 01". Dies bedeutet, dass eine Zugriffsschwelle S = 8 gewählt wurde, dass die Mobilstationen der ersten Nutzerklasse 35 und der vierten, in Figur 1 nicht dargestellten Nutzerklasse unabhängig von einer Auswertung des Zugriffsschwellwertes S und ggf. des Prioritätsschwellwertes P auf den RACH 30 zugreifen dürfen, dass die Mobilstationen der zweiten Nutzerklasse 40 und der in Figur 1 nicht dargestellten dritten Nutzerklasse nicht ohne Auswertung des Zugriffsschwellwertes S und ggf. des Prioritätsschwellwertes auf den RACH 30 zugreifen dürfen. Für den Prioritätsschwellwert P ergibt sich ein Wert von 1. Die zugriffsberechtigten Mobilstationen dürfen den RACH nicht zur Versendung kleiner Datenpakte nutzen, jedoch dürfen sie auf dem RACH Kanalanforderungen für größere Paketdatendienste und Sprach-/Datendienste senden. Im Gegensatz zum ersten Ausführungsbeispiel ist es beim zweiten Ausführungsbeispiel möglich, dass neben Mobilstationen, die aufgrund ihrer Zugehörigkeit zu einer Nutzerklasse auf den RACH 30 zugreifen dürfen, auch solche Mobilstationen auf den RACH 30 zugreifen dürfen, die eine Zufalls- oder Pseudozufallszahl R größer gleich dem Zugriffsschwellwert S ziehen und ggf. einen Prioritätswert oberhalb des Prioritätsschwellwertes P aufweisen.

Im Vergleich zum ersten Bitmuster und zum zweiten Bitmuster enthalten beim dritten Bitmuster die Zugriffsberechtigungsinformationen sowohl die Zugriffsschwellwertbits S3, S2, S1, S0 als auch die Zugriffsklassenbits Z3, Z2, Z1, Z0.

Die im ersten, zweiten und dritten Bitmuster 45, 50 ,55 verwendeten Anzahlen von Bits für den Zugriffssschwellwert S, die Zugriffsklasseninformation Z0, Z1, Z2, Z3, den Prioritätsschwellwert P und die Teilnehmerdiensteinformationen D0, D1, D2 sind lediglich beispielhaft zu verstehen und können, beispielsweise zum umfangreicheren Signalisieren erhöht und zur Bandbreitenreduktion verringert werden. In diesem Fall ändert sich gegebenenfalls auch die Gesamtlänge der Bitmuster 45, 50, 55. Gegebenenfalls können einzelne der Informationskomponenten auch gänzlich ausgelassen werden.

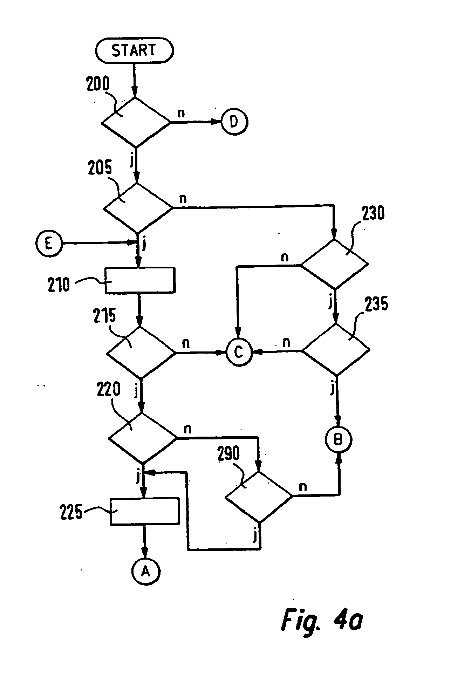

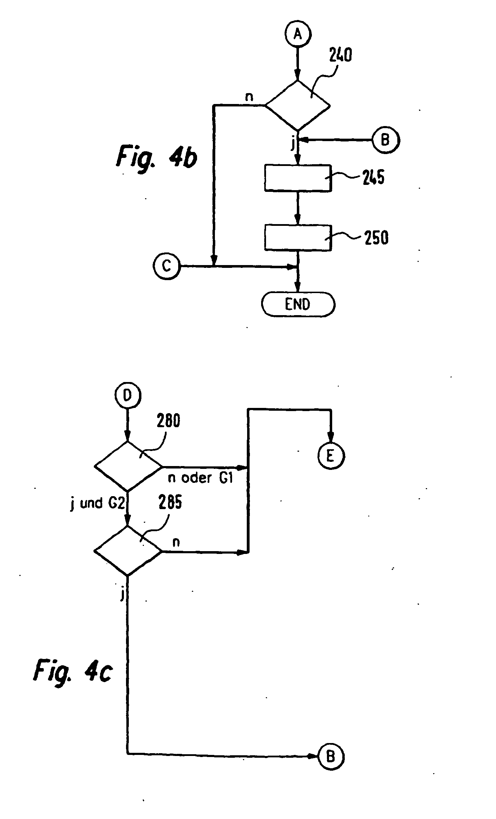

In den Figuren 4a, 4b und 4c ist ein Ablaufplan für die Funktionsweise der Auswerteeinheit 60 dargestellt. Bei einem Programmpunkt 200 prüft die Auswerteeinheit 60, ob die über den BCCH 25 empfangenen Informationssignale ein Bitmuster der Bitlänge von 10 Bit umfassen. Ist dies der Fall, so wird zu einem Programmpunkt 205 verzweigt, andernfalls wird zu einem Programmpunkt 280 verzweigt. Beim Programmpunkt 205 prüft die Auswerteeinheit 60, ob das Auswertebit S4 = 0 ist. Ist dies der Fall, so wird zu einem Programmpunkt 210 verzweigt, andernfalls wird zu einem Programmpunkt 230 verzweigt. Bei Programmpunkt 210 ermittelt die Auswerteeinheit 60 aus den Zugriffsschwellwertbits S3, S2, S1, S0 den Zugriffsschwellwert S und zieht eine Zufalls- oder Pseudozufallszahl R aus der Menge der möglichen Zugriffsschwellwerte S, wobei der größtmögliche Zugriffsschwellwert S für das Ziehen der Zufalls- oder Pseudozufallszahl R ausgenommen sein kann. Anschließend wird zu einem Programmpunkt 215 verzweigt. Bei Programmpunkt 215 prüft die Auswerteeinheit 60, ob die Zufalls- oder Pseudozufallszahl R größer oder gleich dem Zugriffsschwellwert S ist. Ist dies der Fall, so wird zu einem Programmpunkt 220 verzweigt, andernfalls wird das Programm verlassen. Bei Programmpunkt 220 prüft die Auswerteeinheit 60, ob auf der Zugangsberechtigungskarte 75 ein Prioritätswert einer zugehörigen Prioritätsklasse gespeichert ist. Ist dies der Fall, so wird zu einem Programmpunkt 225 verzweigt, andernfalls wird zu einem Programmpunkt 290 verzweigt. Bei Programmpunkt 290 prüft die Auswerteeinheit 60, ob in einem ihr zugeordneten Speicher ein vorgegebener Prioritätswert abgelegt ist. Ist dies der fall, so wird zum Programmpunkt 225 verzweigt, andernfalls wird zu einem Programmpunkt 245 verzweigt. Bei Programmpunkt 225 ermittelt die Auswerteeinheit 60 aus dem empfangenen Bitmuster den Prioritätsschwellwert P. Anschließend wird zu einem Programmpunkt 240 verzweigt. Bei Programmpunkt 240 prüft die Auswerteeinheit 60, ob der Prioritätswert größer oder gleich der Prioritätsschwelle P ist. Ist dies der Fall, so wird zum Programmpunkt 245 verzweigt, andernfalls wird das Programm verlassen. Bei Programmpunkt 245 ermittelt die Auswerteeinheit 60 aus dem Bitmuster anhand der Telekommunikationsdienstbits die nutzbaren Telekommunikationsdienste. Anschließend wird zu einem Programmpunkt 250 verzweigt. Bei Programmpunkt 250 gibt die Auswerteeinheit 60 den Zugriff der zugehörigen Mobilstation auf den RACH 30 zur Nutzung der nutzbaren Telekommunikationsdienst frei. Anschließend wird das Programm verlassen. Bei Programmpunkt 230 prüft die Auswerteeinheit 60, ob auf der Zugangsberechtigungskarte 75 die Zugehörigkeit zu einer Nutzerklasse gespeichert ist. Ist dies der Fall, so wird zu einem Programmpunkt 235 verzweigt, andernfalls wird das Programm verlassen. Bei Programmpunkt 235 prüft die Auswerteeinheit 60 anhand der Zugriffsklassenbits, ob die anhand der Zugangsberechtigungskarte 75 ermittelte Nutzerklasse der Mobilstation für den Zugriff auf den RACH 30 zulässig ist. Ist dies der Fall, so wird zu Programmpunkt 245 verzweigt, andernfalls wird das Programm verlassen. Bei Programmpunkt 280 hat die Auswerteeinheit 60 erkannt, dass ein Bitmuster mit der Bitlänge von 13 Bit empfangen wurde und prüft, ob auf der Zugangsberechtigungskarte 75 eine Zugehörigkeit der zugehörigen Mobilstation zu einer Nutzerklasse gespeichert ist. Weiterhin wird bei Programmpunkt 280 geprüft, ob die Nutzerklasse zu einer ersten Gruppe von Nutzerklassen oder zu einer zweiten Gruppe von Nutzerklassen gehört. Die erste Gruppe von Nutzerklassen wird im folgenden auch als normalprivilegiert bezeichnet. Die zweite Gruppe von Nutzerklassen wird im folgenden auch als bevorrechtigt bezeichnet. Falls bei Programmpunkt 280 erkannt wird, dass auf der Zugangsberechtigungkarte 75 eine Zugehörigkeit der zugehörigen Mobilstation zu der bevorrechtigten Nutzerklasse besteht, so verzweigt das Programm zu Programmpunkt 285. Andernfalls, d.h. falls auf der Zugangsberechtigungskarte 75 keine Zugehörigkeit der Mobilstation zu einer Nutzerklasse erkannt wird oder wenn die normalprivilegierte Nutzerklasse erkannt wird, so verzweigt das Programm zu Programmpunkt 210. Ist dies der Fall, so wird zu einem Programmpunkt 285 verzweigt, andernfalls wird zu einem Programmpunkt 210 verzweigt. Bei Programmpunkt 285 prüft die Auswerteeinheit 60 anhand der Zugriffsklassenbits bei Z3, Z2, Z1, Z0 des empfangenen Bitmusters ob die für die Mobilstation ermittelte Nutzerklasse für den Zugriff auf den RACH 30 berechtigt ist. Ist dies der Fall, so wird zu Programmpunkt 245 verzweigt, andernfalls wird zu Programmpunkt 210 verzweigt. In allen Fällen, in denen das Programm nicht ausgehend vom Programmpunkt 250 verlassen wird, wird von der Auswerteeinheit 60 keine Zugriffserlaubnis auf den RACH 30 für die zugeordnete Mobilstation 5 ermittelt. Nach der Beendigung des Programms teilt die Mobilstation dem Benutzer mit, dass der Zugriff auf den RACH 30 nicht möglich war und erwartet weitere Eingaben des Benutzers. Alternativ dazu wird durch eine in der Mobilstation realisierte Warteschleife das Programm neu durchlaufen, so dass das nachfolgende Informationssignal mit dem nachfolgenden Bitmuster abgewartet und zur Ermittlung der Zugangsberechtigung auf den RACH 30 ausgewertet wird.

Die Informationssignale werden von der Basisstation 100 zu der Mobilstation 5,10,15,20 zu vorgegebenen Zeiten, vorzugsweise in regelmäßigen Abständen übertragen. Der Netzbetreiber kann den Zugriff auf den RACH in Abhängigkeit des Nachrichtenverkehrsaufkommens im Telekommunikationsnetz und damit in Abhängigkeit einer erwarteten Auslastung des RACH 30 für die einzelnen Mobilstationen 5,10,15,20 gemäß dem beschriebenen Verfahren erlauben oder sperren. Da sich das Nachrichtenverkehrsaufkommen im Telekommunikationsnetz mit der Zeit verändert, ändert sich auch die erwartete Auslastung des RACH 30 mit der Zeit, so dass Zugriff auf den RACH in der Regel zu verschiedenen Zeiten mittels entsprechend veränderter Bitmusterbelegung den verschiedenen Mobilstationen 5,10,15,20 zugeteilt wird.

Eine Entlastung des RACH 30 kann zusätzlich dadurch erzielt werden, dass ein Wiederholungszähler und/oder ein Wiederholungsabstand vorgesehen ist. Der Wiederholungszähler gibt die maximale Anzahl der erlaubten Wiedefiolversuche für ein wiederholtes Absenden einer Nachricht von der entsprechenden Mobilstation über den RACH 30 an die Basisstation 100 für den Fall der Kollision mit einer Nachricht einer anderen Mobilstation an. Der Wiederholungsabstand ist ein stochastisches Maß für den zeitlichen Abstand bis zur nächsten Wiederholung der von der jeweiligen Mobilstation an die Basisstation 100 über den RACH 30 gesendeten Nachricht. Je kleiner die Anzahl der erlaubten Wiederholversuche und je größer der Wiederholungsabstand, desto größer die Entlastung des RACH 30. Der Wiederholungszähler und/oder der Wiederholungsabstand kann in regelmäßigen Zeitabständen zusammen mit dem Bitmuster der zugeteilten Zugriffsrechte den entsprechenden Mobilstationen gegebenenfalls zusammen mit weiteren funkzellenspezifischen Informationen auf dem zugehörigen Signalisierungskanal 25 mitgeteilt werden.
Das erfindungsgemäße Verfahren kann in einem Mobilfunknetz nach UMTS-Standard (Universal Mobile Telecommunication System), nach GSM-Standard, oder dergleichen realisiert werden.

Das erfindungsgemäße Verfahren ist nicht auf die Anwendung in einem Mobilfunknetz beschränkt, sondern generell in Telekommunikationsnetzen anwendbar, in denen ein Telekommunikationskanal existiert, welcher zur Anforderung von Telekommunikationsdiensten und/oder zum Versenden von Datenpaketen von mehreren Teilnehmerstationen benutzt wird, wobei das Telekommunikationsnetz beispielsweise auch ein drahtgebundenes Festnetz sein kann.

In einer anderen Ausführungsform kann es auch vorgesehen sein, dass für eine Zugangsberechtigung eine Zufallszahl oder Pseudozufallszahl R kleiner als der Zugriffsschwellwert S vorausgesetzt wird. Entsprechend kann auch für die Prioritätsprüfung mittels des Prioritätsschwellwertes P vorausgesetzt werden, dass die Zufallszahl oder die Pseudozufallszahl R kleiner als der Prioritätsschwellwert P ist.

## Patentansprüche

1. Ein Telekommunikationssystem aufweisend mindestens eine Basisstation (100) und mehrere Teilnehmerstationen (5, 10, 15, 20),
wobei die Basisstation (100) eingerichtet ist, Informationssignale an die Teilnehmerstationen (5, 10, 15, 20) zu senden,
wobei die Informationssignale Zugriffsberechtigungsdaten (55) enthalten, welche sowohl einen Zugriffsschwellwert (S) wie auch Zugriffsklasseninformationen (Z3, Z2, Z1, Z0) enthalten,
und
wobei jede der Teilnehmerstationen (5, 10, 15, 20) einer Nutzerklasse zugeordnet ist und wobei mindestens eine der Teilnehmerstationen (5, 10, 15, 20) einer ersten Nutzerklasse und mindestens eine der Teilnehmerstationen (5, 10, 15, 20) einer zweiten Nutzerklasse zugeordnet sein kann,
wobei jede der Teilnehmerstationen (5, 10, 15, 20) eine Auswerteeinheit aufweist, um für den Zugriff auf einen gemeinsam nutzbaren Telekommunikationskanal anhand der jeweiligen, der Nutzerklasse der Teilnehmerstation (5, 10, 15, 20) zugeordneten Zugriffsklasseninformation (Z3, Z2, Z1, Z0) zu prüfen,
ob die Teilnehmerstation, unabhängig vom Zugriffsschwellwert (S) auf den Telekommunikationskanal zugreifen darf, oder
einen Vergleich des gesendeten Zugriffsschwellwerts (S) mit einer Zufallszahl oder einer Pseudo-Zufallszahl (R) durchführen muss und in Abhängigkeit des Vergleichsergebnisses bestimmt wird, ob der Teilnehmerstation der Zugriff auf den Telekommunikationskanal freigegeben ist.

2. Telekommunikationssystem nach Anspruch 1, **dadurch gekennzeichnet, dass** Mittel zum Senden von Informationssignalen zu vorgegebenen Zeiten an die einzelnen Mobilstation vorgesehen sind.

3. Telekommunikationssystem nach einem der vorhergehenden Ansprüche, **dadurch gekennzeichnet, dass** Mittel zum Senden von Informationssignalen als Bitmuster vorgesehen sind.

4. Telekommunikationssystem nach einem der vorhergehenden Ansprüche, **dadurch gekennzeichnet, dass** Mittel zum Erlauben oder Sperren des Zugriffs auf den gemeinsam nutzbaren Telekommunikationskanal (30) in Abhängigkeit des Nachrichtenverkehrsaufkommens und damit in Abhängigkeit einer erwarteten Auslastung des gemeinsam nutzbaren Telekommunikationskanals (30) für die einzelnen Teilnehmerstationen (5,10,15,20) vorgesehen sind.

5. Telekommunikationssystem nach einem der vorhergehenden Ansprüche, **dadurch gekennzeichnet, dass** Mittel zur Zuteilung des Zugriffs auf den gemeinsam nutzbaren Telekommunikationskanal (30) zu verschiedenen Zeiten mittels entsprechend veränderter Bitmusterbelegung den Teilnehmerstationen (5,10,15,20) vorgesehen sind.

6. Telekommunikationssystem nach einem der vorhergehenden Ansprüche, **dadurch gekennzeichnet, dass** die Basisstation Mittel zum Senden von Informationssignalen über den mindestens einen Signalisierungskanal (25) aufweist.

7. Telekommunikationssystem nach einem der vorhergehenden Ansprüche, **dadurch gekennzeichnet, dass** die Basisstation Mittel zum Senden eines Wiederholungszählers und/oder eines Wiederholungsabstands aufweist.

8. Telekommunikationssystem nach einem der vorhergehenden Ansprüche, **dadurch gekennzeichnet, dass** der mindestens eine Signalisierungskanal als Punkt-zu-Mehrpunkt-Kanal, insbesondere als Broadcast Control Channel, BCCH, ausgebildet ist.

9. Telekommunikationssystem nach einem der vorhergehenden Ansprüche, **dadurch gekennzeichnet, dass** der gemeinsam nutzbare Telekommunikationskanal (30) als wahlfreier Zugriffskanal, insbesondere als Random Access Channel, RACH, ausgebildet ist.

10. Telekommunikationssystem nach einem der vorhergehenden Ansprüche, **dadurch gekennzeichnet, dass** Mittel zum vorübergehenden oder dauerhaft bevorrechtigten Erlauben des Zugriffs auf den gemeinsam nutzbare Telekommunikationskanal (30) nur für bestimmte Nutzerklassen von Teilnehmerstationen vorgesehen sind.

11. Telekommunikationssystem nach einem der vorhergehenden Ansprüche, **dadurch gekennzeichnet, dass** Mittel zum Senden der Informationssignale von einem Netzbetreiber über die Basisstation (100) vorgesehen sind.

12. Telekommunikationssystem nach einem der vorhergehenden Ansprüche, **dadurch gekennzeichnet, dass** Mittel zum gezielten Einschränken oder Freigeben des Zugriffs durch einen Netzbetreiber vorgesehen sind.

## Claims

1. Telecommunication system having at least one base station (100) and a plurality of subscriber stations (5, 10, 15, 20),
wherein the base station (100) is set up to send information signals to the subscriber stations (5, 10, 15, 20),
wherein the information signals contain access authorization data (55) which contain both an access threshold value (S) and access class information (Z3, Z2, Z1, Z0), and
wherein each of the subscriber stations (5, 10, 15, 20) is associated with a user class and wherein at least one of the subscriber stations (5, 10, 15, 20) may be associated with a first user class and at least one of the subscriber stations (5, 10, 15, 20) may be associated with a second user class,
wherein each of the subscriber stations (5, 10, 15, 20) has an evaluation unit in order to use the respective access class information (Z3, Z2, Z1, Z0) associated with the user class of the subscriber station (5, 10, 15, 20) to check, for the purpose of access to a jointly useable telecommunication channel, whether the subscriber station, regardless of the access threshold value (S), is permitted to access the telecommunication channel, or
needs to compare the sent access threshold value (S) with a random number or a pseudo random number (R), and the comparison result is taken as a basis for determining whether the subscriber station is cleared to access the telecommunication channel.

2. Telecommunication system according to Claim 1, **characterized in that** means for sending information signals to the individual mobile stations at prescribed times are provided.

3. Telecommunication system according to either of the preceding claims, **characterized in that** means for sending information signals as bit patterns are provided.

4. Telecommunication system according to one of the preceding claims, **characterized in that** means for allowing or blocking access to the jointly useable telecommunication channel (30) on the basis of the volume of message traffic and hence on the basis of an expected utilization level of the jointly useable telecommunication channel (30) for the individual subscriber stations (5, 10, 15, 20) are provided.

5. Telecommunication system according to one of the preceding claims, **characterized in that** means for allocating the access to the jointly useable telecommunication channel (30) to the subscriber stations (5, 10, 15, 20) at different times by means of appropriately altered bit pattern use are provided.

6. Telecommunication system according to one of the preceding claims, **characterized in that** the base station has means for sending information signals via the at least one signalling channel (25).

7. Telecommunication system according to one of the preceding claims, **characterized in that** the base station has means for sending a repetition counter and/or a repetition interval.

8. Telecommunication system according to one of the preceding claims, **characterized in that** the at least one signalling channel is in the form of a point-to-multipoint channel, particularly in the form of a Broadcast Control Channel BCCH.

9. Telecommunication system according to one of the preceding claims, **characterized in that** the jointly useable telecommunication channel (30) is in the form of a random access channel, particularly in the form of a Random Access Channel RACH.

10. Telecommunication system according to one of the preceding claims, **characterized in that** means for temporarily or permanently allowing only particular user classes of subscriber stations access to the jointly useable telecommunication channel (30) as a privilege are provided.

11. Telecommunication system according to one of the preceding claims, **characterized in that** means for sending the information signals from a network operator via the base station (100) are provided.

12. Telecommunication system according to one of the preceding claims, **characterized in that** means for specifically restricting or providing clearance for access by a network operator are provided.

## Revendications

1. Système de télécommunications comprenant au moins une station de base (100) et plusieurs stations d'abonnés (5, 10, 15, 20),
dans lequel la station de base (100) est apte à transmettre des signaux d'informations aux stations d'abonnés (5, 10, 15, 20),
dans lequel les signaux d'informations contiennent des données de droits d'accès (55) qui contiennent à la fois une valeur de seuil d'accès (S) et des informations de classes d'accès (Z3, Z2, Z1, z0),
et
dans lequel chacune des stations d'abonnés (5, 10, 15, 20) est associée à une classe d'utilisateurs et dans lequel au moins l'une des stations d'abonnés (5, 10, 15, 20) peut être associée à une première classe d'utilisateurs et au moins l'une des stations d'abonnés (5, 10, 15, 20) peut être associée à une seconde classe d'utilisateurs,
dans lequel chacune des stations d'abonnés (5, 10, 15, 20) comprend une unité d'évaluation destinée à tester, pour l'accès à un canal de télécommunications partageable, sur la base de l'information respective de classe d'accès (Z3, Z2, Z1, Z0) associée à la classe d'utilisateurs de la station d'abonné (5, 10, 15, 20), si la station d'abonné peut accéder au canal de télécommunications indépendamment de la valeur de seuil d'accès (S), ou
doit effectuer une comparaison de la valeur de seuil d'accès (S) transmise à un nombre aléatoire ou à un nombre pseudo-aléatoire (R) et il est déterminé en fonction du résultat de la comparaison si l'accès de la station d'abonné au canal de télécommunications est autorisé.

2. Système de télécommunications selon la revendication 1, **caractérisé en ce que** des moyens sont prévus pour transmettre des signaux d'informations à des instants prédéterminés à la station mobile individuelle.

3. Système de télécommunications selon l'une quelconque des revendications précédentes, **caractérisé en ce que** des moyens sont prévus pour transmettre des signaux d'informations sous la forme de configurations binaires.

4. Système de télécommunications selon l'une quelconque des revendications précédentes, **caractérisé en ce que** des moyens sont prévus pour permettre ou empêcher l'accès au canal de télécommunications partageable (30) en fonction du volume de trafic de messages et par conséquent, en fonction d'une charge attendue du canal de télécommunications partageable (30) pour les stations d'abonnés individuelles (5, 10, 15, 20).

5. Système de télécommunications selon l'une quelconque des revendications précédentes, **caractérisé en ce que** des moyens sont prévus pour allouer le canal de télécommunications partageable (30) à des instants différents par allocation des stations d'abonnés (5, 10, 15, 20) d'une manière qui correspond à des configurations binaires modifiées.

6. Système de télécommunications selon l'une quelconque des revendications précédentes, **caractérisé en ce que** la station de base comprend des moyens destinés à transmettre des signaux d'informations par l'intermédiaire de l'au moins canal de signalisation (25).

7. Système de télécommunications selon l'une quelconque des revendications précédentes, **caractérisé en ce que** la station de base comprend des moyens destinés à transmettre un compteur de répétition et/ou un intervalle de répétition.

8. Système de télécommunications selon l'une quelconque des revendications précédentes, **caractérisé en ce que** l'au moins un canal de signalisation est réalisé sous la forme d'un canal du type point à multipoint, notamment sous la forme d'un canal de commande de diffusion, BCCH (Broadcast Control Channel).

9. Système de télécommunications selon l'une quelconque des revendications précédentes, **caractérisé en ce que** le canal de télécommunications partageable (30) est réalisé sous la forme d'un canal d'accès direct, notamment sous la forme d'un Canal d'Accès Aléatoire, RACH (Random Access Channel).

10. Système de télécommunications selon l'une quelconque des revendications précédentes, **caractérisé en ce que** des moyens sont prévus pour ne permettre un accès privilégié temporaire ou permanent au canal de télécommunications partageable (30) qu'à des classes déterminées d'utilisateurs de stations d'abonnés.

11. Système de télécommunications selon l'une quelconque des revendications précédentes, **caractérisé en ce que** des moyens sont prévus pour transmettre les signaux d'informations d'un opérateur de réseau par l'intermédiaire de la station de base (100).

12. Système de télécommunications selon l'une quelconque des revendications précédentes, **caractérisé en ce que** des moyens sont prévus par un opérateur de réseau pour limiter ou autoriser sélectivement l'accès.
